# EUROPEAN PATENT APPLICATION

(11) **EP 3 176 787 A1**
(43) Date of publication of application: **07.06.2017**
(21) Application number: 15197244.5
(22) Date of filing: 01.12.2015
(51) Int. Cl.: G11B 27/031, G06T 13/00

(54) **METHOD AND SYSTEM FOR GENERATING AN ANIMATED MOVIE**

(71) Applicant: Wonderlamp Industries GmbH, 14482 Postsdam-Babelsberg (DE)
(72) Inventor: QUOSDORF, Fabian, 10243 Berlin (DE); SIELAFF, Clemens, 14471 Potsdam (DE); SCHINDLER, Stephan, 14467 Potsdam (DE)
(74) Representative: Bittner, Thomas L.

(57) **Abstract**

A method for generating an animated movie, wherein the method is executed by a processor of a computing device and comprises steps of: providing a screenplay in an electronically readable format, wherein the screenplay comprises metadata referring to a scene of the movie, deriving character information from the metadata, wherein the character information includes one or more actors and one or more set of actions assigned to each of the one or more actors, and generating the scene, wherein the scene defines a sequence of actions which are linked via cues, wherein each action has a start cue and an end cue, and wherein each cue depends on a constraint. Furthermore, a system for generating an animated movie is disclosed.

## Description

The disclosure refers to a method and a system for generating an animated movie.

### Background

Animation has long been a time consuming and manual, frame-by-frame creation of a movie. Even today, as animation is almost exclusively created by the use of computer technology, most of the actual animation (the task of "animating" non-living characters and objects) is still done by hand, using key frames and animation curves. As long as we keep the notion of a user's job as "telling the computer what to do", successful production of a daily animated series remains questionable.

This reasoning goes alongside a metaphor used in game AI programming. It compares the artificial intelligence of a game character with a cattle drive. The intelligence solving this task is split into 3 separate entities: the ranch owner, the cowboy and his horse. The ranch owner stands on the top of a hill, overlooking the drive. He tells the cowboy where which gate the cattle should go through as it is his job to manage the ranch as a whole. The cowboy's job is to find out from where to approach the herd, which way to follow them and to react on unexpected escape attempts. He in turn commands the horse that does not know anything about the context of what is going on - it simply reacts to whatever the cowboy says at any given time. Its job is to do the leg-work, move from A to B at a speed directed by its rider. In the work-flow for both traditional and modem animated series, the directors are the cattle owners. The editors, DOPs, animators and TDs are the cowboys and computers are their horses. But does this mean, it has to stay that way forever?

### Question: What is the meaning of DOP and TD?

One could argue that the only "creative" decision made in the process of the metaphoric cattle drive was the ranch owner's. Both, the cowboy and even more so his horse, have to act inside the constraints of their respective orders. Applied to movie making, this insight means that the act of creating a movie is something that only involves a few key persons - the ones with a vision and creative power to realize it. Yet, by far the most time and money is spend not by the creatives, but the large number of manual workers that is required to act as intermediates between the vision and the machine. It is their job, as stated, to "tell the computer what to do". Instead, what we should focus on is a different approach: "telling the computer what we want". This way, we lift the creative process one level higher, allowing the filmmaker to "make films", instead of simulating physical movement over time.

### Summary

It is an object to provide improved technologies for generating animated movies.

In one aspect, a method for generating an animated movie according to claim 1 and a system for generating an animated movie according to claim 12 are disclosed. Further embodiments are subject matter of dependent claims.

A method for generating an animated movie is provided which is executed by a processor of a computing device. The method comprises steps of: providing a screenplay in an electronically readable format, wherein the screenplay comprises metadata referring to a scene of the movie, deriving character information from the metadata, wherein the character information includes one or more actors and one or more set of actions assigned to each of the one or more actors, and generating the scene, wherein the scene defines a sequence of actions which are linked via cues, wherein each action has a start cue and an end cue, and wherein each cue depends on a constraint.

Further, a system for generating an animated movie, comprising a processor and memory coupled to the processor is disclosed. The processor is configured to receive a screenplay in an electronically readable format, wherein the screenplay comprises metadata referring to a scene of the movie, derive character information from the metadata, wherein the character information includes one or more actors and one or more set of actions assigned to each of the one or more actors, and generate the scene, wherein the scene defines a sequence of actions which are linked via cues, wherein each action has a start cue and an end cue, and wherein each cue depends on a constraint.

The method may be called Actor-Cue Principle (ACP) and can form the basis for a language to describe the narrative of a movie in a fashion that is both explicit and abstract enough to allow rapid iterative editing.

As one example, the ACP best lends itself to a specific kind of production: the scenic, animated, long-running series. Animated because it can describe the whole narrative of a movie - everything that happens in a scene. Unlike action on a real set, actions within a computer are predefined and nothing happens by change. This allows for a very precise and deterministic approach of describing the scene that would never be possible in real life. That said, the ACP does also offer possibilities for interaction between real and virtual actors. Any form of film that involves live action material must either be predefined in its entirety (stock footage) or must be isolated and wrapped in a system that allows for live activation of cues. Both are valid options, but both utilizing only a subset of the features offered by the ACP. Scenic means that the contents of the series should be somewhat relatable to reality. While it is possible to use exaggerated physics, do impossible stunts or have characters with superhuman abilities - the storytelling should follow an understandable causality. Series do lend themselves better for using the ACP, simply because the balance between initial investment and payoff during production tips towards greater payoff, the longer assets can be reused.

Note that the terms "film" and "movie" are used interchangeably and both can as well mean a TV episode, a short film, a commercial, a webisode etc.

The scene may have a start scene cue indicating the beginning of the scene (also called alpha) and an end scene cue indicating the end of the scene (also called omega). The scene may also be called a cuesheet. The scene (or cuesheet) provides a set of control commands which allow outputting the scene on an output device. A start cue is a point of time when an action begins. An end cue is a point of time when an action is finished. An end cue for an action may be a start cue for another action.

The screenplay may be provided in xml format.

A constraint of an action can depend on time (also called time constraint), on a position of at least one of the one or more actors, on another action in the sequence of actions or on another constraint. Each cue may depend on one or more constraints. A constraint may also depend on a position of an object. Constraints depending on a position of an actor or on a position of an object may be called spatial constraints. Each cue may depend on a combination of one or more of the before-mentioned constraints.

A set of actions assigned to one of the one or more actors can include text to be spoken by the actor and / or movement actions for moving the actor. The set of actions may comprise one or more actions. Each action can have exactly two cues, namely the start cue and the end cue. Alternatively, each action may have more than one start cue and / or more than one end cue. Each actor of the one or more actors may have a unique set of actions assigned to him. In most cases, the main characters of the movie will each have a unique set of actions. There can also be a case, where several actors have the same set of actions assigned to them. E.g. several actors may be classified as extras and the same set of actions may be assigned to them.

The actions, the cues, the constraints and / or the sequence of actions can be adjusted by user input, e.g. via a user interface, and the scene can be adapted to the adjustment. The scene can be automatically adapted to any kind of user input which leads to a change of the scene. A user can generate control commands via the user input in order to adjust the scene. The adjustment can be conducted before generating the scene. For example, an action of a selected actor can be amended before generating the scene. Adjustment is also possible after the scene is generated, e.g. the scene can be adjusted while outputting the scene.

For example, the screenplay may comprise the dialog of two actors. Usually, a dialog is an exchange of statements. After a first actor has finished his first statement, a second actor replies with a second statement. The first statement may start with a first start cue and end with a first end cue. The second statement may start with a second start cue and end with a second end cue. The constraint of the second start cue may be that the first end cue has been reached (or in other words that the first statement is finished).

From the amount of the text in the dialog, the length of statements of each actor may be derived. In one embodiment, the dialog in the screenplay may be converted in text to be spoken by the actors using a text-to-speech program. Changing the dialog may lead to a different length of the first statement. Using the constraint(s), the scene can be automatically adapted to the reduced length of the first statement so that the second statement still begins after the first statement is finished without delay.

In another example, adjusting the scene may become necessary if the text of the actor(s) is provided by records from dubbing actor(s). If one dubbing actor is replaced by another dubbing actor, the length of the spoken text may change, e.g. due to a different speech rhythm. Also in this case, the scene can be automatically adapted using the constraints.

An action can be defined in different ways, namely implicitly and explicitly. An example for an explicitly defined action would be the action "walk for 3 minutes with a speed of 3 km/h in a specific direction". E.g., an implicit definition is "walk to John". In this case, the length of the walk depends on the position of the actor John. The position of John is the constraint for the end cue of the action of "walk to John". If John is placed at a different location, the walk is adapted automatically because of the constraint. Implicit definition of actions allows defining relationships between actors and / or objects (see below).

At least one actor of the one or more actors may comprise several body parts, and a set of body part actions can be assigned to each of the body parts. The set of body part actions may comprise one or more body part actions. To automatically decide which body part actions are exclusive and which can run concurrent on the same actor, the actors may be logically divided into body parts. The body parts can be hierarchically organized. Each body part may be subdivided in further body parts. Every body part action may be assigned to exactly one body part. In one embodiment, only one body part action can be active on the same body part at any time. Multiple body part actions can run on different body parts simultaneously.

Following, an exemplary division of an actor into body parts is provided. The full body is divided in the upper body and the lower body. The upper body is further segmented in the left arm, the right arm and the head. The lower body is divided in the left leg and the right leg. The hierarchy may define how the animations of the concurrent actions are blended. The body part actions on the body parts that are lower in the hierarchy blend their animations into the animations of their parents (or override them). Thereby, the body part actions only affect the body parts that they are assigned to and no other body parts.

In the Van Helsing example (see below), the "sit on the throne" action of Dracula is played on his "Full Body" body part and thus affect his whole body. His "reply" action is an action on the body part "Head" and thus can be executed concurrently to the "sit" action. The head animation of the "reply" action is blended onto the "sit" action. If Dracula should do some gestures with his arms while talking, one would add the desired gesture action to one of the arms or both. This gesture action would then define how the arms are animated but will not affect the head animation defined by the speaking action and vice versa.

The method may further comprise deriving location information from the metadata, wherein the location information includes one or more objects. The location information may comprise information about the one or more object selected from the following list: a shape of the object, dimension information of the object, an appearance of the object, a position of the object and any combination thereof. An object model can be assigned to at least one of the objects. The object model can be a graphical model, e.g. a three dimensional (3D) model. The object model can be provided from an object library. The constraints of the cues may depend on one or more objects, e.g. on the shape, the dimension, the appearance and / or the position. The object(s) may be defined using implicit conditions (e.g. place a tree next to house) or explicit conditions (e.g. place a tree at a specific position defined by a set of coordinates).

The method can further comprise checking the generated scene in order to identify constraints which are in conflict with each other. A signal may be outputted if a conflict is determined. The signal may be an optical signal (e.g. a text message) and / or an acoustic signal. The constraints being in conflict with each other may be identified and outputted.

The method may further comprise assigning an actor model to at least one of the one or more actors. The actor model may be a graphical model, e.g. a 3D model. The actor model, which may be called an avatar, can be provided from an actor library. The actor library can be combined with the object library. Alternatively, the actor library and the object library may be separated from each other. The actor model and / or the object model can be provided in the FBX file format which provides interoperability between digital content creation applications. In one embodiment, the actor model may be specifically created for the movie. In both embodiments, either providing the actor model from an actor library or creating the actor model for the movie, the animations of the actor model, e.g. the possibilities to move specific body parts, determine the actions in the movie. By enhancing the animations of the actor model, additional actions can be implemented in the movie.

The character information and / or the location information can be derived directly from the metadata. Alternatively, the method may further comprise of transforming the metadata in order to derive the character information and / or the location information.

The method may further comprise outputting the scene to a display device and / or an audio device. The display device and / or the audio device may be coupled to the computing device, e.g. the display device and / or the audio device may be integrated in the computing device. Alternatively or in addition, the generated scene can be transmitted to an output device. While the scene is outputted, user commands for changing the scene may be received. For example, a camera angle may be changed during playing the scene.

The method is executed by a processor of a computing device. The computing device may further comprise memory coupled to the processor. The memory can comprise volatile memory such as random access memory and / or non-volatile memory such as a magnetic hard drive, a solid state drive or a flash memory. Further, the computing device may comprise means for communicating with other computing device, e.g. via a local area network (LAN), a wireless local area network (WLAN), and / or Bluetooth. The computing device may be coupled with an input device, such as a mouse, a trackball, a touch sensitive screen and / or a keyboard. Further, a display device and / or an audio device can be coupled to the computing device. The display device (e.g. a touch sensitive screen) and / or the audio device can be integrated in the computing device. The computing device can be a desktop personal computer, a notebook, a laptop, a tablet, and / or a smartphone.

The method may be implemented on a client server architecture. Processes such as extracting metadata from the screenplay or outputting the scene may be executed by a server. Receiving user input for adjusting the scene can be performed on a client. After the user input is finished, the adjusted scene may be transferred to the server for updating the status of the scene and resolving the constraints. Parallel development of a scene, using multiple clients connected to the server, is possible.

The features described herein in context with the method can also be applied to the system and vice versa.

### Description of embodiments

Following, embodiments are disclosed with reference to figures. Here show:
Fig. 1 an overview of a complete scene (or cuesheet),
Fig. 2 to Fig. 11 details of the overview of Fig. 1, and
Fig. 12 an overview of another scene.

At the beginning of each movie is a screenplay. It contains the order of scenes, establishes locations and describes story-relevant character actions including lines of dialog. While undoubtedly being at the core of the story, the same screenplay can turn into vastly different experiences in the hand of different filmmakers. It alone is therefore not sufficient to describe the finished movie, yet no (mainstream) movie can exist without it.

The following is a scene of a fictional screenplay for demonstration purposes. It is a cheesy confrontation between Van Helsing and Dracula, ending in a rather underwhelming death of the vampire.

### INT. DRACULA'S THRONE ROOM NIGHT

VAN HELSING stands in the open door, lightning flashing behind his ripped leather cloak. An oversized, blood-red carpet leads up to DRACULA on his throne, eying the intruder calmly as he enters.

### VAL HELSING

So this is where you spend your lazy afternoons.

### DRACULA

Marvelous interior, don't you think? Over a hundred men died in these halls during construction and even more since.

Van Helsing loads his crossbow unimpressed.

### VAL HELSING

Looks like there's still one corpse left. Let me dispose of it!

Both opponents eye each other for a few tense seconds. Suddenly, Dracula pounces forward!

Time slows down as Van Helsing yanks his crossbow up and fires a single bolt right into Dracula's heart! Dracula is violently stopped mid-flight and falls to the floor - limb. He dies as the tower clock strikes midnight.

As you can see, all the mayor pillars of the story are there - yet barely anything about finished movie experience. It does not tell the reader much about the environment, where the action happens and nothing about the camera. This is the process of staging, which is for the most part in the domain of the director. For our purposes though, an intermediate step between the screenplay and staging is proposed.

During the scene breakdown, all implicitness is removed from the screenplay's description. This is a non-trivial task that will have to be performed manually for each scene by a dedicated "Scene Engineer". However, once we have a fully explicit scene definition, working with it is all the easier.

First, all actors in the scene need to be identified. In the above screenplay there are three (main ones): Van Helsing, Dracula and the Tower Bell. It is important to realize that not only persons are "actors" in a technical sense, but everything that acts in creating the scene. To be fully correct, even backdrops, like scenery and the environment, are actors, as existing is also acting just not inter-acting. They are however non-animate objects and therefore not of interest to the staging. We could argue that both the crossbow and its bolt are actors as well - and since they are an essential part of the story, should be treated as main actors. This would certainly be true in a different setup; in this scene however they are considered as extensions of the Van Helsing actor.

Next, each actor needs a list of actions that he needs to perform during the scene, ordered by start time and with duplicates. The Tower Bell is the easiest:
1. Be quiet
2. Strike midnight
3. Be quiet

As stated, every action must be declared explicitly. It is important not only to include actions that are mentioned in the screenplay but effectively everything an actor does even if what he does is nothing.

The list for Dracula reads as follows:
1. Sit on the throne
2. Say "Marvelous interior, don't you think? Over a hundred men died in these halls during construction and even more since."
3. Raise
4. Stand imposingly in front of the throne
5. Pounce at Van Helsing
6. Fall limb to the ground
7. Lay still
8. Die
9. Stay dead

You will notice that the Scene Engineer included several unmentioned actions in Dracula's list, namely: 3, 4, 7 and 9. Of them "Lay still" and "stay dead" (7 and 9) are implicitly included in the screenplay - we expect a dead person to stay dead as this is a quite final state. However it is essential to understand, that "die" (8) is an action of definite length - while "stay dead" (9) does not imply a fixed duration. Actions "raise" and "stand in front of the throne" (3 and 4) are of a different kind, as they were not mentioned in the screenplay at all. In fact, the scene could even go without, if we assume that Dracula can pounce at Van Helsing from a sitting position. However, as the Scene Engineer is already familiar with the material and knows that the director regularly emphasizes the "energy" of the scene (a sitting character is not very energetic), he added those actions on intuition. As we will see later one, removing those particular actions is an easy fix, if required.

Lastly the hero, Van Helsing:
1. Stand in the open door
2. Walk to the foot of the carpet
3. Say "So this is where you spend your lazy afternoons."
4. Briefly evaluate the situation
5. Load the crossbow
6. Say "Looks like there's still one corpse left. Let me dispose of it!"
7. Wait for Dracula to make his move
8. Shoot the crossbow into Dracula's heart
9. Watch Dracula die
10. Relax

Since Van Helsing is the scene's hero, most of his actions are story relevant and included in the screenplay. However, some additional details had to be added as well. Action "walk to the front of the carpet" is a clarification of the vague "...as he enters" in the screenplay. Note that the actual position that Van Helsing walks to does not matter, as long as it is defined at all. Tweaking details like these is the director's job later on. The action "briefly evaluate the situation" (4) is another example of added detail by the Scene Engineer that is not explicitly mentioned in the screenplay. He felt like there should be a small moment where Van Helsing plans ahead to make the following occurrences more meaningful. But, just as before, it is the director's final decision and the scene could just as well work without it. Just like Dracula and the Tower Bell, Van Helsing also has a trivial last action that might go on indefinitely and will last until the end of the scene, as declared by the director.

Actions are one of the two fundamental building blocks of the Actor-Cue Principle, the other one is now introduced.

Now, that we have a comprehensive list of every action that is part of the scene, we need to define when and how each of them is performed. These two questions cannot be solved separately, because the way an action is executed often influences its duration. Still, it is possible to focus the "when" first and disregard the "how" for now.

The question "when" can be answered by specifying the amount of time relative to some other time - most commonly to whatever time is now. The answer might be explicit: "in 5 minutes", or implicit: "tomorrow at 11:00" or "in 300 meters". Both of those declarations can be resolved into an explicit one. The first one with simple math: subtract the current time from the time specified. The second answer on the other hand, needs additional parameters and only makes sense under certain circumstances: the person in question has to be moving in a fixed direction, at a known speed that is larger than zero. All criteria are assumed to be met, therefore, we can calculate the time of arrival from now.

In shooting a movie, the first fixed time point in the scene is the moment the director calls "Action!" - it is the scene's first cue. A cue is the point in time, where an action starts or ends. When is determined by a constraint that, when resolved, yields a specific amount of time in relation to some other fixed time point in the scene. This point can be another cue, or an action that advances to a certain state. Every cue has one placement in time and one or more constraints.

Multiple actions might start on the same cue, but no action might start without one. This is easily understood, as it is the cue that defines an action's start time and an action that does not start, does not exist. Furthermore, each action also ends on a cue, even if it does not spawn any follow up actions. Having each action span two cues adds flexibility when working with the director, makes for a consistent scene description and comes at no additional cost.

Just as every action stretches between two cues, a whole scene stretches between the first (director calls "Action!") and the last scene cue (director calls "Cut!"). With this final cue, all actions are completed and the scene has officially ended. This last cue can be either defined by an occurrence in the story (the main character is shot, resulting in the immediate end of the movie) or dramatic choice of the director, as is the case with the example.

As stated, apart from the start scene cue and the end scene cue, every other cue is defined solely by its offset to a single, logically preceding point inside the scene. This is a necessary distinction, because logically preceding does not necessarily mean temporally preceding at least not in a narrative. Defining these points and offsets for each cue is the definition of building a cuesheet.

It is assumed that all actors are able to perform their listed actions and query their progress at any time. Building the cuesheet is defining the narrative causality of a scene. Narrative causality works differently from experienced causality in real life (see below), but the idea is the same: One action triggers one or more re-actions that might themselves trigger further re-actions etc. In creating the cuesheet, one first has to create and connect cues. Then, you span actions between two cues, which may later be used as reference point for new cues. It is important to understand that in building such a causality tree, time technically does not matter. It is however hard to imagine timeless causality, a cuesheet therefore has a unit-less notion of time along a positive x-axis which is separated in discrete columns. All actors involved in the scene are placed in rows above.

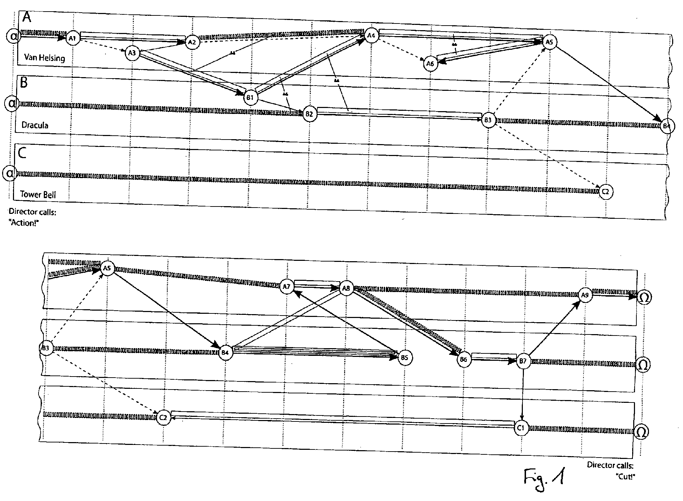

Fig. 1 shows the complete illustration of the scene (or cuesheet). Even though it might look daunting at first, we will go through the construction of the cuesheet step-by-step.
Notice, that for readability reasons cues between B3 and B4 are duplicated.

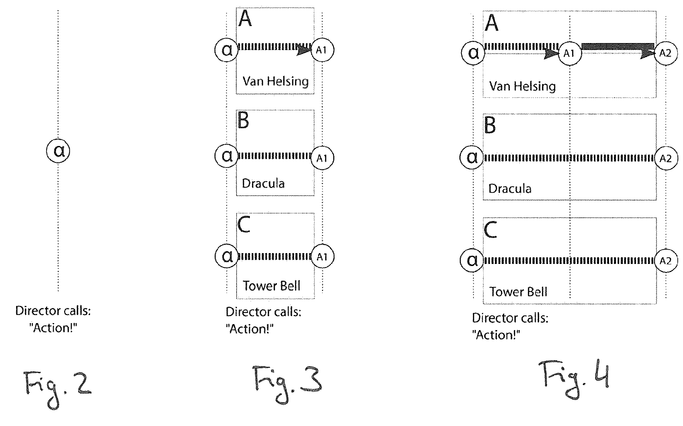

Step 1 (Fig. 2): Let's continue to work on the example previously established: The very first cue is trivial - it is the start scene cue and the only one without a constraint. Simply called alpha, it is the root of the cue graph that is about to be constructed and has no children not even an end-cue. This scene is not valid yet as we cannot even define the first action for each actor.

Step 2 (Fig. 3): A cue is, at its core, the point in time where the scene as a whole reaches a certain configuration. However, it is inherent to assign each cue to one particular actor, because it is not the cue that becomes apparent in the scene, but the actions it incites and actions are always owned by a single actor. In the case of the example screenplay it is Van Helsing who makes the first move, when entering Dracula's hall.

As Van Helsing's row is labeled "A", we will call this cue A1 and place it on Van Helsing's row in the first column. Additionally, we can note the constraint that needs to be solved to place the cue in time: approximately 2 seconds need to pass after the scene starts (an educated guess by the Scene Engineer).

This cue allows us to establish the first action for our hero, which is also illustrated in the graph. Both Dracula's and the Tower Bell's first actions are also be inserted spanning alpha and A1 as well, even though obviously this is not their final configuration. With the added actions, the Scene is now a 2 second long sequence of Van Helsing standing in the door, Dracula sitting on the throne and the Tower Bell being quiet. Not much to see yet.

Step 3 (Fig. 4): Notice, that even though A1 marks the end of Van Helsing standing in the door, it does not define the following action as well. For that, we need another cue that marks the end of said action. At this point we already know what that action is: Van Helsing entering the hall and we know when it starts: at cue A1. The next cue therefore is a trivial one, it marks the end of the "entering the hall"-animation. Notice that the constraint for the new cue is not explicitly declared, but dependent on the length of the animation that precedes it. This is also the reason why the animation bar in the illustration is solid instead of dashed like the previous one, where the animation depends on an explicit passage of time. We call this cue A2.

Actions for Dracula and the Tower Bell remain the same. Since each actor needs to have at least one valid action at any point in the scene, their actions now span from alpha to A2. The scene is now 2 + x seconds long, where x is the time needed by the actor to walk to the end of the carpet.

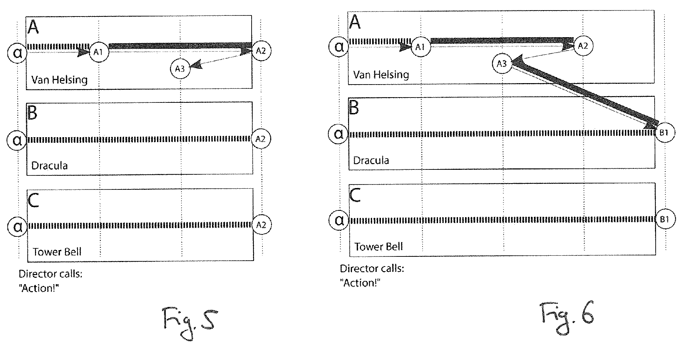

Case in point (Fig. 5): The next action in the Scene is Van Helsing saying his first line. However, looking at the animation so far, the Scene Engineer decides, that it would look unnatural for the hero to stand in the door first, then walk silently into the hall, then stop and then start talking. Instead, people tend to do several things at once walk and talk, for example. We will call this cue A3 (the time at which Van Helsing says his first line), even though it needs to occur some time before A2. The question is when exactly.

So far, there are four options:
a) We could base A3 on alpha, saying that Van Helsing will start his line a predefined time after the scene has started no matter what state the rest of the scene is in.
b) We could base A3 on A1; this way he would start saying his text a predefined time after starting to enter the room.
c) Or we could base A3 on A2, stating that Van Helsing should start talking at a specified time before coming to a halt. The keyword here is "before", because even though A3 would be dependent on A2, A2 would actually occur after A3 in scene time. This is what is called "temporarily inverse causality".
d) There is even a 4th option, although it is only a variant of the third: Van Helsing could start speaking as soon as he enters a predefined space, for example as soon as the crosses an imaginary line one meter away from the door. The result of this option is similar to the third one; the only difference is that this cue would depend on a spatial, rather than temporal constraint.

Each of those options is totally valid and their outcome could actually be exactly the same. Logically, however, they describe different setups. As the Scene Engineer deems it most important that the hero starts speaking at a defined time (3 seconds in this case) before coming to a halt, he chooses option number 3. We also place A3 on the A-row, in between A1 and A2. To avoid overlapping causality arrows, both A2 and A3 are slightly offset vertically. If you look at the scene playing out at this point however, you will not see Van Helsing talking just yet. A2 only marks the time at which Van Helsing starts speaking his line; it does not automatically add the action to the scene. Even though there is a causality link from A2 to A3, there is no action between those two. Also, if the time it takes for Van Helsing to enter the hall would turn out to be less than 1 second, A3 would actually occur before alpha, invalidating the scene. For the purpose of this example, we assume that the evaluation of the cuesheet results in a valid scene description.

Step 4 (Fig. 6): Now it is Dracula's turn to speak and the next cue is the first one for the vampire: called B1. The action is therefore spanned between A3 and B1. Connecting an action of one actor to a cue "owned" by another actor is no problem, since the concept of actors owning a cue is a notional anyway. When we assume that Van Helsing's line takes longer than 3 seconds B1 occurs after A3, so it is placed one column to the right.

If we were to look at the scene now, we would see the following: Van Helsing standing in the door and start walking into the hall after 2 seconds. 3 seconds before coming to a halt, he speaks his first line. The scene ends on Van Helsing finishing his line.

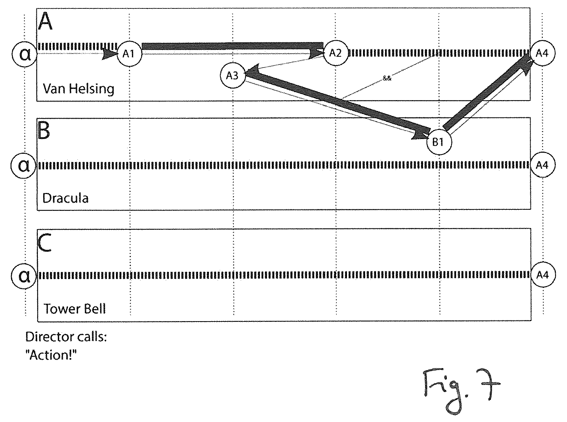

Step 5 (Fig. 7): After finishing his speech, Dracula could continue to his next action and rise. We will however deal with that in the next step and decide to follow B1 with another cue for Van Helsing - A4, which will become the start point of Van Helsing's next action: "load the crossbow".

On the one hand, it does make more sense from a storytelling standpoint to have Van Helsing react to Dracula's speech by an action, rather than just looking around - the other reason is a technical one: We know that Dracula starts speaking at B1 and finishes on a cue placed to the right. We also assume that B1 occurs after A3. This however leaves us with a problem. Every actor needs at least one action at any given time and if Van Helsing would start his next action "briefly evaluate the situation" after Dracula has finished speaking, there would not be anything for him to do between A3 and the newly established A4. The Scene Engineer may of course insert additional "idle" actions wherever he pleases, but in this case he does not need to since Van Helsing is capable of evaluating the situation (between A3 and A4) at the same time he is talking (between A2 and B1). This would not be possible, if the two animations were exclusive. To show that they are, both animation bars are connected with a logical AND (&&)-symbol.

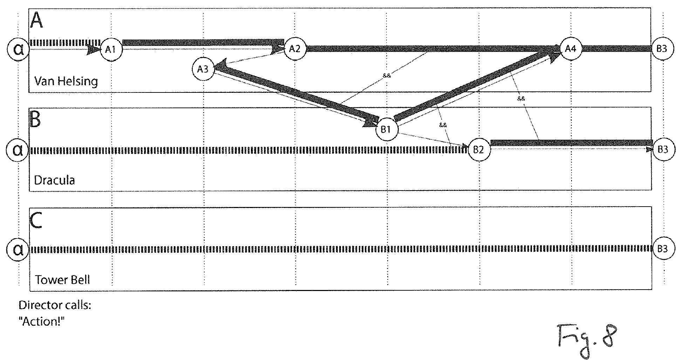

Step 6 (Fig. 8): Staying with B1 for this step, we now have our first branching of causality. Remember that each cue has at least one constraint it depends on - graphically speaking: a black arrow leading to it. A cue can spawn more than one follow-up cue. In this case, B1 has two.

A4 is already defined, B2 is next. Dracula's upcoming action is "raise" and the Scene Engineer decides (for the purpose of demonstration), that the animation should begin 3 seconds after Dracula starts speaking, thereby creating two simultaneous action threads. This is a similar setup to Van Helsing walking and talking at the same time. B2 not only marks the start of "raising", but also the end of the previous animation "sit on the throne". The "reply" animation must therefore be compatible (not-exclusive) with both animations.

The link between B1 and A4 is the one with main causality. You notice that the arrow between B1 and B4 is twice as thick as the one between B1 and B2.

We already know that the "raise" animation will end on a cue, but since it is not mentioned in the screenplay, no other cue depends on it and we can just place B3 right now. Since we assume that B3 occurs after A4, we can simply place a temporary "idle" animation for Van Helsing between A4 and B3 to validate the scene. This animation will be replaced in the next step; therefore it is surrounded by brackets in the illustration.

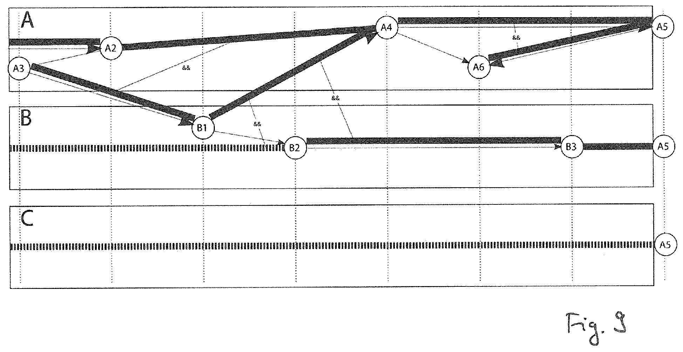

Step 7 (Fig. 9): Van Helsing's next move is "loading a crossbow": an animation with a clear start and finish - once the crossbow is loaded, there is nothing further to be done. For the purpose of the story however, the action of loading the crossbow is not really what is important, Van Helsing's next line is. The Scene Engineer therefore decides to let the end of Van Helsing's final insult of the vampire coincide with the end of the loading animation.

This approach generates an interesting problem: We have two animations of fixed and most likely dissimilar length: "loading the crossbow" and "saying a line". They both need to end on the same cue A6, and the longer one needs to start from A4. The shorter animation however, has to start some time after A4, with an offset equal to the difference in duration.

For this special case, the answer is simple. We can look at the fixed duration of each animation, take the longer one and span it between A4 and A5. The shorter one is then constrained to A5 via temporarily inverse causality and starts at A6. For illustration purposes, loading the crossbow is assumed to be the longer animation.

Answering a more general case however, might be more complicated. Imagine that the speaker acting for Van Helsing is exchanged after defining this scene. His new performance is a little bit longer than the animation takes to load the crossbow. With the current setup this would result in Van Helsing speaking over the last line of Dracula; not what the director wanted.

We could prevent such behavior from happening with two techniques: the first one would be to construct a "XOR"-statement that would automatically determine the longer animation and reconstruct the cuesheet accordingly. This however would only work for the problem at hand - also its implicit nature would severely weaken the overall design of the Actor-Cue Principle.

The second option is a more general one: the introduction of conditions. With a condition, we can assert that a scene that would go against our understanding of the story raises an error during compilation. This does not solve the problem but it notifies us in time before any damage is done. For this, we connect A4 and A6 with a temporal condition, visualized by a dashed arrow pointing in the direction of time (A6 has to happen after A4). Also notice that in the following illustrations some additional conditions have been added to the scene to make it more robust.

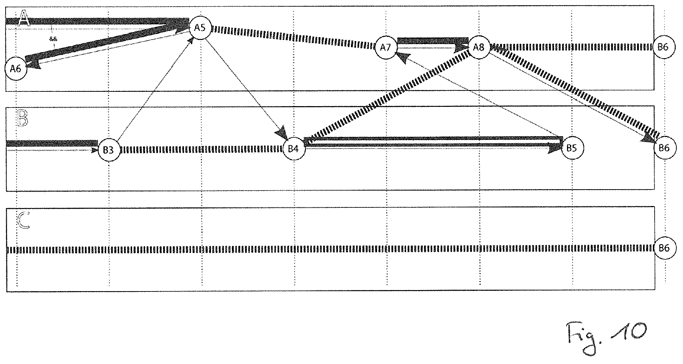

Step 8 (Fig. 10): The next step is a big one, so let's inspect what is supposed to happen in the story. First, both opponents "eye each other for a few tense seconds" as it says in the screenplay. Easy enough - we connect A5 to B4 and set the constraint to 4 seconds. Later, in the editing process those 4 seconds might be expanded or shrunk, resulting in either fast- or slow-motion.

At B4 is where this step introduces a new concept which is called "imaginary action" because even though it does technically exist - it never shows up in the movie. At B4, Dracula pounces at Van Helsing but is hit by a bolt mid-flight and falls to the ground. The difficulty in describing this sequence of events in terms of the Actor Cue Principle is the fact that Van Helsing is supposed to wait until Dracula has reached the highest point during his jump, before he starts firing his crossbow.

If Van Helsing was a real human actor, he would see Dracula jump and in his mind (!) extrapolate the vampire's movement to find out when to fire. That means, that Dracula does in fact finish his attack - but only inside Van Helsing's imagination, which enables Van Helsing to counter it. Using an imaginary action, we can construct such an unseen event while staying true to the ACP. One thing at the time, though.

Connecting B4 and B5, we have an imaginary action "pounce at Van Helsing", the one with the transparent stripe down the middle. It sole purpose is to enable the computer to figure out when Dracula has reached the highest point; it is never actually seen on screen. After evaluating this point in time, we can now draw a causality link to A7.

A7 is the moment, at which Van Helsing stops waiting for Dracula to make his move and starts firing. His shooting animation is most likely either procedurally created or -aided, but since we already know were Dracula will be at any given point in time, generating the animation is possible. Remember that for the purpose of this demonstration, the bolt is treated like an extension to Van Helsing's actor - so the moment at which the projectile hits Dracula is another Van Helsing cue (even though it could just as well be placed on Dracula's row without changing the resulting scene).

A8 is the moment, where Van Helsing (and the bolt) stop their "shoot" and begin the "watch Dracula die" animation. For Dracula, this cue is the point at which he suddenly stops pouncing and starts to fall to the ground. Notice that there is in fact a "pounce at Van Helsing" animation in the scene, as it does not play out like the one calculated earlier though; they are different instances of the same animation.

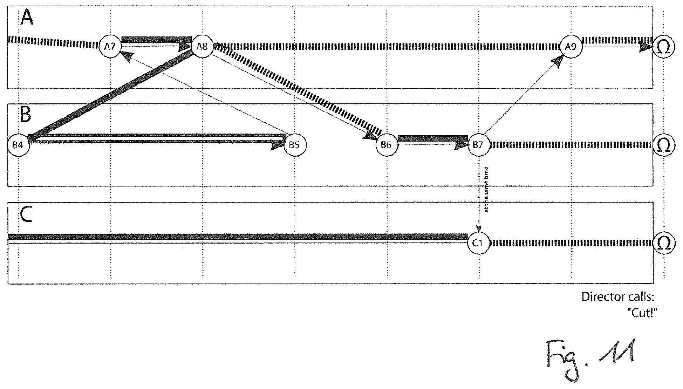

Step 9 (Fig. 11): Dracula dies as the tower clock strikes midnight. This sentence finally pays off having the Tower Bell an actor in its own right. With the previous step completed, we have Dracula fallen to the floor at B6 while Van Helsing watches from a safe distance. B6 is logically followed by B7 - the end of Dracula's death animation. This is also where the Tower Bell strikes midnight at C 1.

Striking midnight is an animation of fixed length, of which we only know the end time so it makes sense to constrain it using temporarily inverse causality. The only difference here is that the Scene Engineer decided to introduce a separate cue for the Tower Bell at the same time as B7, to keep the entanglement between these two actors at a minimum. He could as well have connected the actions "strike midnight" and the following "stay quiet" to B7 directly and it would have not made a difference how the scene plays out. In that case however, he would have two invalid actions if he had to remove or invalidate B7 later on.

As a lucky coincidence, the first strike of the clock happens right after Dracula rises from his throne and in order to be notified if something changes the order of events, he places another condition between B3 and C2.

One second after Dracula dies, Van Helsing can finally relax at cue A9. And he does so until the end of the scene. The end in this case is not defined by something happening inside the scene, but rather a fixed number of seconds that the director wants to keep staying. He decides on 3 seconds to give the camera time to pull back. This is where the scene finishes. The last cue is, like the first one, an end scene cue, appropriately labeled omega.

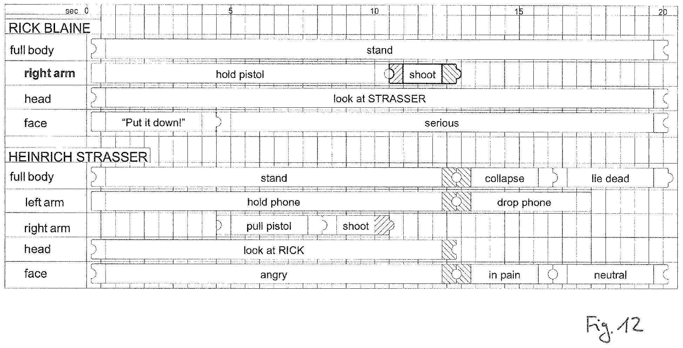

Fig. 12 shows an overview of another scene (or cuesheet). The scene is taken from the movie "Casablanca". Two actors are involved, namely Rick Blaine and Heinrich Strasser. In this embodiment, the actors each comprise several body parts, and body part actions are assigned to the body parts. Rick comprises a full body, a right arm, a head and a face. Note that the avatar for Rick may of course have a left arm. However, because the left arm is not used in the scene, it is not mentioned explicitly. Strasser comprises a full body, a left arm, a right arm, a head and a face.

During the scene, each body part performs one or more body part actions. In the beginning, Rick stands (full body) holding a pistol in its right arm and looking at Strasser (action of the head). He says: "Put it down!" to Strasser. Strasser stands holding a phone in his left arm and looks angry at Rick. After Rick finishes his sentence, Strasser pulls a pistol with his right arm and shoots at Rick. Rick shoots back at Strasser. Strasser collapses and drops the phone. His face is moved in pain. Finally, Strasser dies and the scene ends.

This scene shows that different body part actions can be performed parallel to each other. For example, after being shot, the body of Strasser collapses, the left arm drops the phone and the face shows pain. All body part actions occur simultaneously.

Further, a body part may have no action. After Strasser is shot, his head stops looking at Rick. No specific body part action is defined for the head after being shot.

The features disclosed in the specification, the claims and the figures can be relevant for the implementation of embodiments either individually or in any combination with each other.

## Claims

1. A method for generating an animated movie, wherein the method is executed by a processor of a computing device and comprises steps of:
- providing a screenplay in an electronically readable format, wherein the screenplay comprises metadata referring to a scene of the movie,
- deriving character information from the metadata, wherein the character information includes one or more actors and one or more set of actions assigned to each of the one or more actors, and
- generating the scene, wherein the scene defines a sequence of actions which are linked via cues, wherein each action has a start cue and an end cue, and wherein each cue depends on a constraint.

2. The method of claim 1, wherein a constraint of an action depends on time, on a position of at least one of the one or more actors, on another action in the sequence of actions or on another constraint.

3. The method of claim 1 or 2, wherein the actions, the cues, the constraints and / or the sequence of actions can be adjusted by user input, and wherein the scene is adapted to the adjustment.

4. The method of any one of the preceding claims, wherein a set of actions assigned to one of the one or more actors includes text to be spoken by the actor and / or movement actions for moving the actor.

5. The method of any one of the preceding claims, wherein at least one actor of the one or more actors comprises several body parts, wherein a set of body part actions is assigned to each of the body parts.

6. The method of any one of the preceding claims, further comprising deriving location information from the metadata, wherein the location information includes one or more objects.

7. The method of claim 6, wherein the location information comprises information about the one or more object selected from the following list: a shape of the object, dimension information of the object, an appearance of the object, a position of the object and any combination thereof.

8. The method of any one of the preceding claims, further comprising checking the generated scene in order to identify constraints which are in conflict with each other.

9. The method of any one of the preceding claims, further comprising assigning an actor model to at least one of the one or more actors.

10. The method of any one of the preceding claims, wherein the character information is derived directly from the metadata.

11. The method of any one of the preceding claims, further comprising outputting the scene to a display device and / or an audio device.

12. A system for generating an animated movie, comprising a processor and memory coupled to the processor, wherein the processor is configured to
- receive a screenplay in an electronically readable format, wherein the screenplay comprises metadata referring to a scene of the movie,
- derive character information from the metadata, wherein the character information includes one or more actors and one or more set of actions assigned to each of the one or more actors, and
- generate the scene, wherein the scene defines a sequence of actions which are linked via cues, wherein each action has a start cue and an end cue, and wherein each cue depends on a constraint.
